# EUROPEAN PATENT SPECIFICATION

(11) **EP 4 441 476 B1**
(45) Date of publication and mention of the grant of the patent: **12.11.2025**
(21) Application number: 22829694.3
(22) Date of filing: 29.11.2022
(51) Int. Cl.: G01G 17/08, G01G 21/30

(54) **IMPROVED ANIMAL WEIGHING APPARATUS**
VERBESSERTE TIERWIEGEVORRICHTUNG
APPAREIL DE PESAGE POUR ANIMAUX AMÉLIORÉ

(30) Priority: 30.11.2021 AU 2021903870
(43) Date of publication of application: 09.10.2024
(73) Proprietor: DATAMARS SA, 6814 Lamone (CH)
(72) Inventor: DRIVER, Timothy, Alice Springs, Northern Territory 0870 (AU); MORRISON, John Richard James, 2010 Auckland (NZ); MEMON, Ashif Iqbal, 0600 Auckland (NZ); GIBSON, John Edward, 0626 Auckland (NZ)
(74) Representative: M. Zardi & Co S.A.
(86) International application number: PCT/EP2022/083623
(87) International publication number: WO 2023/099453

(56) References cited:
- CN-U- 214 621 420
- ES-U- 1 270 429
- US-A1- 2016 290 853

## Description

### FIELD OF THE INVENTION

The present invention relates generally to the field of animal management, and in particular to apparatus and methods for weighing large animals.

### BACKGROUND TO THE INVENTION

It is often necessary to obtain an accurate weight of a large animal. For example cattle, sheep and other sizeable animals of economic importance may require frequent weighing for herd management or breeding reasons. For example, a farmer will typically wish to control feeding by maintaining proper growth rate charts on his animals. It is also beneficial to keep a chart on each animal as means for keeping track of health conditions and maturity. Consequently it is necessary to periodically weigh the animals. As another example, a substantial weight drop of a remotely recorded weight of a pregnant cow may indicate the animal has calved. The date of weight drop may be indicative of the calving date.

Large animals in zoos and other facilities may require routine weighing to monitor health, pregnancy and for other veterinary indications.

Large animals must be weighed on substantial apparatus. A weighing apparatus is typically comprised of a floating platform, under which one or more load cells are disposed. The animal is directed onto the platform, with the platform being urged downwardly on and compressing the load cells. The amount of compression is proportional to the weight of the animal therefore allowing a weight to be calculated.

It is known by users of such apparatus that after some use, the apparatus may become inaccurate or even completely fail. Rectification is often achieved by replacing one or more of the load cells. These components are expensive to replace, and in any event further failure is often experienced again after replacement.

A further problem is that animals can take some time to train in the use of a weighing apparatus. A training period is often required to train the animal to walk onto the apparatus platform and remain relatively stationary to allow an accurate weight to be obtained. Animals often hesitate to walk onto the platform, and must be lead or pushed onto it. Even once on the platform, an animal may move constantly, thereby causing fluctuations in the weight recorded. Generally, a period of time passes before the animal calms down, and ceases moving such that the weight recording stabilizes.

During the training period, significant operator time is taken in weighing animals, this leading to a loss in productivity in a commercial farming operation, or a zoo.

A further problem in the art is that weighing apparatus are often heavy, and therefore not easily transported and/or assembled at the weighing site. While some prior art weighing apparatus are designed so as to be easily dismantled and assembled, the individual parts may nevertheless be heavy and therefore difficult to handle.

It is an aspect of the present invention to overcome a problem of the prior art to provide improved weighing apparatus and methods, or to at least provide a useful alternative to apparatus and methods of the prior art.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each claim of this application.

Relevant patent documents of the prior art are ES1270429U, CN214621420U, US2016/290853A1 and US7112750B2.

### SUMMARY OF THE INVENTION

The invention is defined by independent claim 1.

In one embodiment of the first aspect, the one or more barriers comprise a barrier disposed generally lateral to the weight measurement device.

In one embodiment of the first aspect, the one or more barriers are disposed so as to generally face opposing lateral surfaces of the weight measurement device.

In one embodiment of the first aspect, the one or more barriers are disposed to generally face most or all of the lateral surfaces of the weight measurement device.

In one embodiment of the first aspect, the one or more barriers extend upwardly from a structure disposed partially or completely inferior to the weight measurement device.

In one embodiment of the first aspect, the structure disposed partially or completely inferior to the weight measurement device is a support base configured to directly or indirectly bear on a substrate upon which the weighing apparatus is disposed.

In one embodiment of the first aspect, the one or more barriers extend downwardly from a structure disposed partially or completely superior to the weight measurement device.

In one embodiment of the first aspect, the structure disposed partially or completely superior to the weight measurement device is the weight bearing surface, or a structure connected directly or indirectly to the weight bearing surface.

In one embodiment of the first aspect, the weight bearing surface is provided by a weighing platform.

In one embodiment of the first aspect, the one or more barriers extend upwardly from a structure disposed partially or completely inferior to the weight measurement device and downwardly from a structure disposed partially of completely superior to the weight measurement device.

In one embodiment of the first aspect, the apparatus is configured such that the one or more barriers comprise a barrier configured to move generally downwardly upon an animal bearing its weight on the weight bearing surface, and generally upwardly upon an animal bearing its weight on the weight bearing surface.

In one embodiment of the first aspect, the one or more barriers comprise a first barrier disposed proximal to a lateral surface of the weight measurement device and a second barrier disposed outwardly lateral to the first barrier, the first and second barriers being independently movable relative to each other upon an animal bearing and not bearing its weight on the weight bearing surface.

In one embodiment of the first aspect, the apparatus is configured such that the first and second barriers are independently movable relative to each other, and limited in that movement to prevent a line of sight being established from a view at an outward lateral position and toward the weight measurement device.

In one embodiment of the first aspect, the apparatus is configured such that the first and second barriers are independently movable relative to each other, and limited in that movement such that from a lateral view the first and second barriers overlap.

In one embodiment of the first aspect, the overlap is at least about 10, 20, 30, 40, 50, 60, 70, 80, 90 or 100 mm.

In one embodiment of the first aspect, the weight measurement device is an electrical or electronic device.

In one embodiment of the first aspect, the weight measurement device comprises a load cell.

In one embodiment of the first aspect, the weight measurement device is a load bar.

In one embodiment of the first aspect, the weight measurement device is configured to weigh an animal having a weight of at least about 5, 10, 20, 30, 40, 50, 60, 70, 80, 90, 100, 200, 300, 400, 500, 1000, 1500, 2000, 2500 or 3000 kg.

In one embodiment of the first aspect, the weight bearing surface is configured to conceal, or configured to facilitate concealment of a foreign sensory stimulus of the platform and/or associated structure from an animal to be weighed.

In one embodiment of the first aspect, the foreign sensory stimulus is an auditory, visual or tactile stimulus arising from the animal to be weighed walking on the weight bearing surface.

In one embodiment of the first aspect, the tactile stimulus is the texture, give or temperature of the weight bearing surface.

In one embodiment of the first aspect, the weight bearing surface provides a sensory stimulus the same or similar to concrete or rubber.

In one embodiment of the first aspect, the weight bearing surface is provided as the surface of a lightweight panel, the platform having a generally hollow internal space although including vertical walls therein so as to confer compression resistance.

In one embodiment of the first aspect, the internal space of the platform is occupied by cellular structures.

In one embodiment of the first aspect, the lightweight panel has an upwardly directed face being coated with a material that provides a sensory stimulus the same or similar to concrete or rubber.

In one embodiment of the first aspect, the apparatus comprises one or more removable water barriers arranged above the platform so as to limit contact with any part of the apparatus with a liquid travelling toward the apparatus.

In one embodiment of the first aspect, the liquid travelling toward the weight measurement device is a cleaning composition directed as a jet or a spray at pressure.

In one embodiment of the first aspect, the apparatus is configured to measure the weight of a farm animal or a zoo animal.

In one embodiment of the first aspect, the farm animal is an adult or juvenile animal selected from the group consisting of a cow, a sheep, a pig, a horse, a goat, a deer, an alpaca, and a llama.

In one embodiment of the first aspect, the zoo animal is an adult or juvenile animal selected from the group consisting of: a zebra, a rhinoceros, a giraffe, an elephant, a tiger, a lion, a leopard, a gorilla, a hippopotamus, and a bear.

In a second aspect, the present invention provides a method for weighing an animal, the method comprising the step of, causing or allowing an animal to move onto the platform of the weighing apparatus of any embodiment of the first aspect.

In one embodiment of the second aspect, the animal is a farm animal or a zoo animal.

In one embodiment of the second aspect, the farm animal is an adult or juvenile animal selected from the group consisting of a cow, a sheep, a pig, a horse, a goat, a deer, an alpaca, and a llama.

In one embodiment of the first aspect, the zoo animal is an adult or juvenile animal selected from the group consisting of: a zebra, a rhinoceros, a giraffe, an elephant, a tiger, a lion, a leopard, a gorilla, a hippopotamus, and a bear.

### BRIEF DESCRIPTION OF THE FIGURES

FIG. 1A illustrates an upper perspective view of a preferred weighing apparatus of the present invention. The apparatus is shown with the upper side facing upwards, as would be the case in normal use.
FIG. 1B illustrates a perspective view of the underside the weighing apparatus of FIG. 1A.
FIG. 2 illustrates a perspective view of the underside of one end of the weighing platform of the apparatus of FIG. 1A but with the base plate shown separately in FIG. 3. The drawing more clearly shows the water barriers that extend downwardly from the platform. The load bar is not drawn. The same arrangement of barriers is provided at the other end of the platform.
FIG. 3 illustrates an upper perspective view of one of the base plate pairs of the apparatus of FIG. 1A to more clearly show the water barriers that extend upwardly therefrom. The load bar is not drawn.
FIG. 4 illustrates a cross-section taken through the line X--X' as drawn in FIG. 1A. The view of the cross-section is toward the Y' terminus of the line Y--Y' as drawn in FIG. 1A.
FIG. 5 illustrates a cross-section taken through the line Y-Y' as drawn in FIG. 1A. The view of the cross-section is toward the X' terminus of the line X--X' as drawn in FIG. 1A.
FIG. 6 is a photograph of a load bar useful in the preferred embodiment drawn in FIG. 1A, two of such load bars being required

Unless otherwise indicated herein, features of the drawings labelled with the same numeral are taken to be the same features, or at least functionally similar features, when used across different drawings.

The drawings are not necessarily prepared to any particular scale or dimension and are not necessarily presented as being a completely accurate presentation of the various embodiments.

### DETAILED DESCRIPTION OF THE INVENTION AND PREFERRED EMBODIMENTS THEREOF

After considering this description it will be apparent to one skilled in the art how the invention is implemented in various alternative embodiments and alternative applications. However, although various embodiments of the present invention will be described herein, it is understood that these embodiments are presented by way of example only, and not limitation. As such, this description of various alternative embodiments should not be construed to limit the scope or breadth of the present invention. Furthermore, statements of advantages or other aspects apply to specific exemplary embodiments, and not necessarily to all embodiments, or indeed any embodiment covered by the claims.

Throughout the description and the claims of this specification the word "comprise" and variations of the word, such as "comprising" and "comprises" is not intended to exclude other additives, components, integers or steps.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

As used herein, positional terms such as "lateral", "across", "above", "below", "higher", "lower", "upward", "downward", "upper view" and the like are to be considered with reference to a weighing apparatus as used in a normal upright position so as to allow an animal to walk onto the weight bearing surface and therefore be weighed.

The present invention is predicated at least in part on the inventors' discovery that the cause of failure or inaccuracies in weighing apparatus is due to the ingress of water into one or more of the load cells. As will be appreciated, weighing apparatus must be frequently cleaned to remove contaminants including faecal matter, urine and environmental contaminants such as soil, gravel, leaves, twigs and the like.

Typically, water (optionally with a surfactant, disinfectant or other active) is sprayed at high pressure onto the weighing platform to flush off any contaminants. Often contaminants dislodged from the apparatus are moved by the operator directing the spray pressure onto the substrate so as to push the contaminants to a drain or other point of collection or disposal. In that process, water may rebound from the substrate (especially where it is hard) and contact the weighing device beneath the weight bearing surface.

While load cells used in animal weighing apparatuses have been considered by prior artisans to be of robust construction, the present inventors have discovered that even very small amounts of water can penetrate a load cell housing and cause disturbance in the electrical and electronic components therein. More particularly it has been found that jets of water that are directed to lower lateral portions of the weighing apparatus, and also water rebounding from a hard substrate about the base of the apparatus, can enter the load cell housing. It has been previously considered that such housings are essentially impervious to water ingress, and so the cause of the malfunctions and failures was not apparent at the filing date of the present application.

Upon recognition of the true nature of the problem of weighing apparatus inaccuracies and failure, an improved weighing apparatus is provided which (at least in some circumstances) inhibits or prevents water contacting the load cell.

In light of the recognised problems, the present invention provides an apparatus for weighing an animal, the apparatus comprising: a weight bearing surface configured to allow an animal to bear its weight thereon, a weight measurement device having lateral surfaces and configured such that the weight of an animal disposed on the weight bearing surface is measureable by the weight measurement device, and one or more barriers disposed about the weight measurement device, the one or more barriers configured to limit or prevent contact of water travelling toward the weight measurement device.

It has been found that the use of water barriers about the apparatus weight measurement device (such as a load cell disposed beneath the platform) in a manner according to the present invention results in lower rates of malfunction and failure. Preferably, the use of multiple barriers creates a tortuous path between the apparatus environs and the weighing device so as to cause significant difficulty for a jet of water from a pressure washer to contact the weighing device disposed under the weight bearing surface.

The present invention will now be more fully described by reference to the non-limiting embodiments of the drawings.

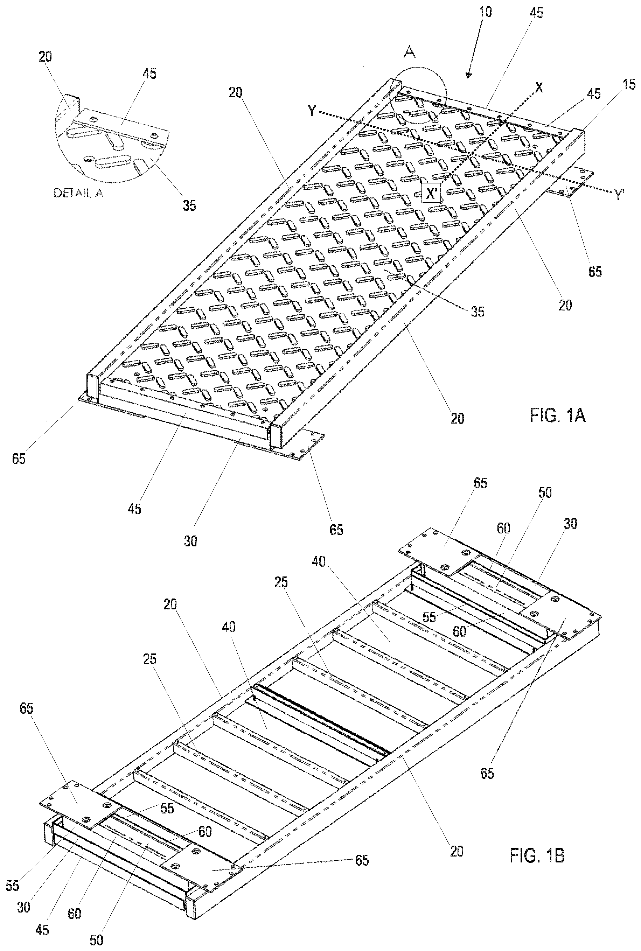

Turning firstly to FIG. 1A and FIG. 1B, a preferred weighing apparatus (10) of the present invention is shown. The weighing apparatus (10) comprises a weighing platform (15) having parallel side beams (20) connected by a plurality of cross-members (two of which are marked (25)) and opposing end brackets (30). The weight bearing surface upon which the animal stands is provided by a heavy duty rubber mat (35) disposed on a panel (40) which is light yet compression resistant. A rubber hold-down angle (45) is screwed onto the platform at each end to prevent movement of the mat (35).

Paired load bars (50) are disposed at each end of the platform (15) and disposed inferior to the matt (35) and panel (40).

Surrounding each load bar (50) are overlapping water barriers. The first set of barriers (55) extend downwardly from about the panel (40). The first set of barriers (55) sit inside the second set of barriers (60) and the second set of barriers (55) extend upwardly from the base plates (65).

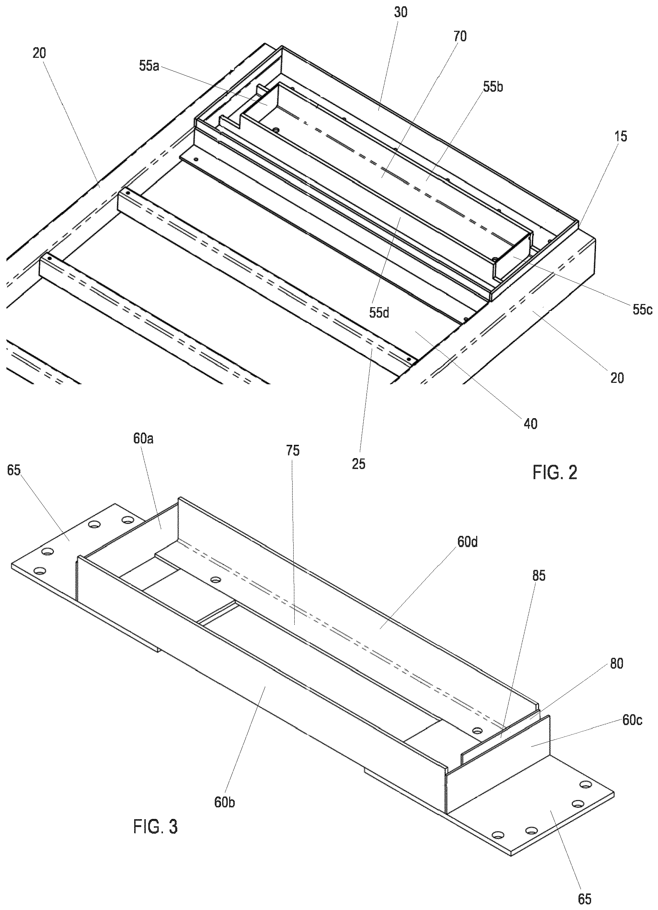

Turning now to FIG. 2, there is shown the underside of one end of the platform although without the load bar, second set of barriers or base plates. The space in which the second set of barriers and load bar would normally sit is marked (70). This view shows more clearly the first set of barriers (55a, 55b, 55c, 55d) which in this embodiment forms a quadrilateral barrier that extends about the entire perimeter of the load bar.

FIG. 3 shows in isolation the second set of barriers (60a, 60b, 60c, 60d) and base plates (65). The second set of barriers (60a, 60b, 60c, 60d) also form a generally quadrilateral barrier around the entire perimeter of the load bar (not drawn). The load bar would normally sit in the space marked (75).

It will be appreciated that the load bar need not be completely surrounded by a barrier. For example, barriers may face only the laterally exposed surfaces of a load cell, where only two opposing barriers may be used. Alternatively, only a single barrier may be required in some circumstances in order to provide a useful degree of water protection.

The base plates (65) comprise fastener holes for mounting on a stable structure so as to prevent any movement (lateral and vertical) during use. For example, the base plates (65) may be fastened to a metal frame (not drawn), the frame in turn sitting on the ground or other substrate.

The second set of barriers (60a, 60b, 60c, 60d) do not form a completely closed quadrilateral barrier, with a channel (80) being formed by a fifth barrier (85) and barrier (60c). The channel (80) provides for passage of a cable (not drawn) which powers the load bar and communicates output from the load bar to a microprocessor (not drawn).

It will be appreciated that a channel such at that shown is not essential to the invention, and the second set of barriers (60a, 60b, 60c, 60d) may form a completely closed quadrilateral barrier. In such as case, the cable may exist through an aperture formed in a barrier, and a sealant or grommet used about the cable to exclude water. Alternatively, the cable may pass through the space formed between the base plates (65).

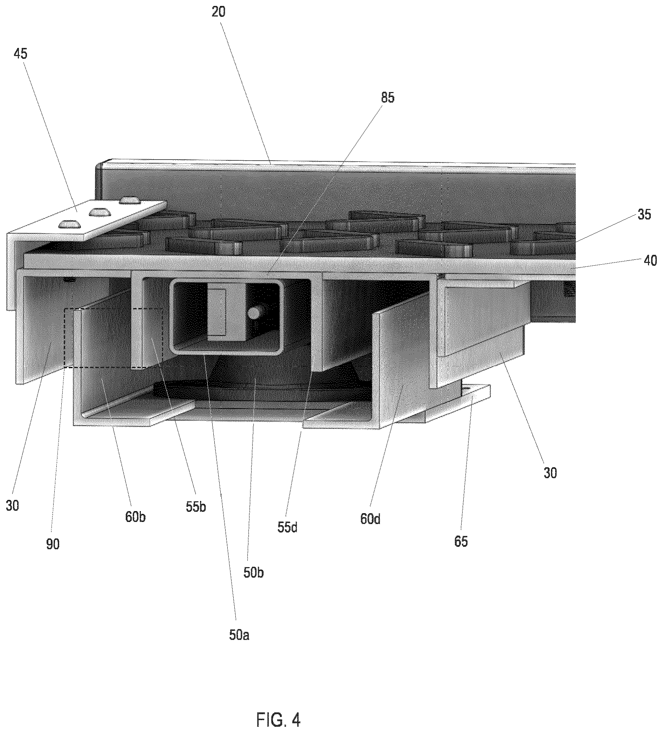

Reference is now made to FIG. 4 showing more particularly and in cross-sectional view through the line X-X' shown in FIG. 1, the relative spatial arrangements of the load bar (50), first set of barriers (55), second set of barriers (60). The load bar comprises a horizontal member (50a) and two supports (one marked (50b)). It will be noted that the rubber mat (35) bears on the panel (40), which in turn bears on a horizontal portion (85) from which the barriers (55b) and (55d) extend, the horizontal portion in turn bearing on the horizontal member (50a) of the load bar. Thus, the weight of an animal (not drawn) standing on the rubber mat (35) is transferred to the load bar horizontal member (50a).

As will be appreciated most clearly from FIG. 4, the barriers (55b) and (60b) have regions of significant overlap (90) thereby providing a tortuous or indirect route for any water travelling generally toward the load bar (50) from the sides of the apparatus, or rebounding upwardly from the substrate and toward the load bar (50). In order for water to contact he load bar (50), the water would be required to pass over the top of barrier (60), and then change direction so as to move downwardly to contact the potion (50b). To contact a higher portion of the load bar (such as (53)) the water would need to change direction after passing under barrier (55b) and then travel upwardly. Of course, such reversals of direction in the movement of water are generally impossible thereby providing significant protection for the load bar (50). The probability of malfunctioning or failure due to water contact is therefore significantly lessened.

An upwardly extending barrier may extend upwardly as far as possible so as to provide the greatest barrier to water entry. However, the barrier should not extend so far as to contact the platform as it moves downwardly under the weight of an animal. Similarly, a downwardly extending barrier will extend downwardly as far as possible so as to provide the greatest barrier to water entry, but not so far so as to collide with a structure below when the platform moves downwardly.

In this preferred embodiment, each of the barriers (55) and (60) has a quadrilateral form thereby surrounding the load bar (50). Accordingly, the load bar (50) is protected from water travelling from any lateral point about the apparatus (10).

Importantly, the nested nature of the barriers (55) and (60) allows for free vertical movement of the platform (15) and attached barrier (55) relative to the base plates and attached barrier (60). Thus, when an animal walks onto the rubber mat (35) for weighing, the weight of the animal causes a downward vertical movement of the platform (15) and in turn the load bar horizontal member (50a). Under the animal weight, the load bar horizontal member (50a) moves downwardly while the supports (50b) remain stationary. The downward movement of the horizontal member (50a) acts on a transducer in load bar which outputs a digital or analogue signal reflective of the weight exerted thereon.

The present apparatus is configured such that an overlap (90) is always present, and irrespective of the vertical positon of the platform (15). Generally speaking, the vertical distance travelled by the load bar horizontal portion in normal use (i.e. from animal off to animal on the platform) is relatively small. Accordingly, the first (55) and second (60) barriers may be relatively short in vertical length (say, 5 to 10 centimetres).

It is preferred that a limited gap is formed between barriers (55) and (60), and in that regard the lateral distance between barriers (55b) and (60b) may be adjusted so as decrease the distance. The optimal gap is the smallest gap (to inhibit the travel of water) but still large enough to accommodate any lateral movement in barrier (60b) to prevent collision with barrier (55b). As will be appreciated, a large animal moving onto and off the rubber mat (35) may cause significant lateral motion of the platform (15) as a whole, thereby requiring a consideration of the lateral distance between adjacent barriers.

In this preferred embodiment, the end bracket (30) may also perform a water barrier function. Staying with FIG. 4, it will be noted that the bracket (30) is positioned so as to interfere with the path of water travelling generally laterally and toward the load bar (50). In that regard it may be considered that the barrier (60b) is interleaved between the bracket (30) and barrier (55b).

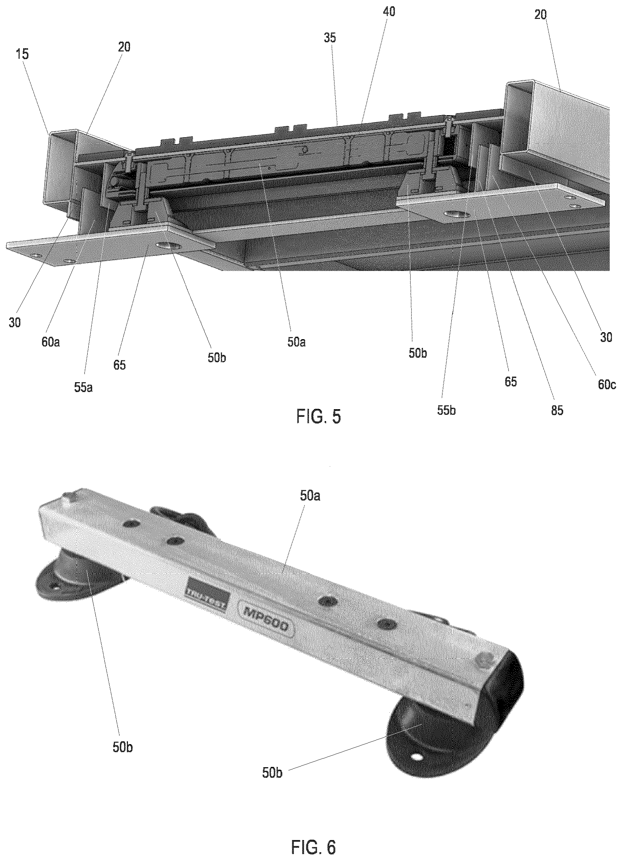

FIG. 5 shows a further cross-sectional view through the line marked Y-Y' in FIG. 1, showing more completely how the load bar (50a, 50b) extends across the width of the platform (15). As will be understood, a load bar (50) is disposed at each end of the platform, and each load bar (50) is protected by a first set (55) and a second set (60) of water barriers.

FIG. 6 shows a load bar suitable for use with the preferred embodiment of the drawings.

A water barrier of the present apparatus may be fabricated from any material deemed suitable by a skilled artisan. Generally, rigid materials are preferred so as to resist any bending due to the impact of high pressure water jet thereon. Materials such as metals and high density plastics are preferred, provided at a thickness that resists deformation in routine use and cleaning of the apparatus. Where a metal is used, consideration should be given to avoiding corrosion given the expected exposure to water, cleaning chemicals, soil, salts and the like. Stainless steel is a particularly preferred material.

The preferred embodiment of the drawings provides a rubber mat for the animal to stand on while being weighed. It is proposed that a rubber mat simulates the floor of a dairy milking pit, being a surface over which a dairy cow is familiar with. Thus, when stepping onto the platform the cow is not subjected to any foreign feel under the hooves, or any foreign noises of smells when being weighted. Accordingly, the animal is easily and readily lead onto he weighing platform, and without the need for any previous training. Moreover, the animal is more likely to remain still whilst being weighed, thereby resulting in a more accurate weight being recorded.

Some dairy cows are more familiar with concrete floors, and accordingly the platform may comprise a layer of concrete. The concrete may be provided as a single slab, however to ease handling and transport it is preferred that multiple portions of concrete are provided and assembled on the platform. That arrangement still does not decrease the overall weight of the apparatus, and in any event a cow may be unsettled by the spaces between the concrete portions. In that regard a more highly preferred material is lightweight cellular material which mimics the feel of concrete under hoof. An exemplary material is sold commercially as Tread Deck^{™} (Queensland, Australia; URL www.treaddeck.com.au).

Where an animal is more familiar with a natural environment, the platform may comprise an overlay including a natural material or a simulated natural material. The overlay may be soil, sand, gravel, grass or leaves. Alternatively, the overlay may be a simulated natural material having the appearance and/or feel, and or smell and/or sound of soil, sand, gravel, grass or leaves.

Another stimulus which may be avoided in one embodiment of the present invention is the step presented to the animal by the weighing platform. The sight of a step (being a foreign stimulus) may lead to hesitation in an animal, the hesitation needing to be trained out of the animal over an extended period of time. Thus, the present weighing apparatus may comprise a flexible cover extending from the edge of the weighing platform to the ground, the cover acting to conceal the edge of the weighing platform. The flexibility of the cover allows for the platform to move freely vertically (as it must to properly exert a force on the load cells when an animal is being weighed) while still concealing the platform edge.

An overlay may be fixed to the platform, or may be added by a user. Typically, the latter approach leads to greater advantage because a natural material in the immediate environment on site may be used for an overlay, with animals already being familiar with the look and feel of the substance.

For example, a weighing apparatus having a platform of the present invention may be transported to a site, and the local soil may be dug up and used as an overlay. On some sites the soil may be of a light color and looser in composition, and in others the soil may be darker and have a greater clay component. These soils will look and feel different to an animal, and so the use of an unfamiliar soil may lead to an animal showing greater hesitation compared with the circumstance where a familiar soil is used as the overlay.

The flexible cover may in turn be concealed by a layer of a natural material or a simulated natural material to diminish or remove any foreign stimulus provided by the flexible cover. Thus, in one embodiment the flexible cover may comprise an overlay comprising a natural material or a simulated natural material. The overlay may be soil, sand, gravel, grass or leaves. Alternatively, the overlay may be a simulated natural material having the appearance and/or feel, and or smell and/or sound of soil, sand, gravel, grass or leaves.

The platform may be configured to retain a natural substance on or about the platform. As will be appreciated, a layer of more than minimal depth is required to conceal the underlying foreign sensory stimulus of a platform. To assist in maintaining a useful depth of natural substance (such as soil, leaves etc), a lip or a low wall may be provided about the edge of the platform to retain the substance. The lip or wall may extend about the entire perimeter of the platform or may only run along the long sides of the platform, the short ends of platform remaining open and therefore able to remain substantially flush with the surrounding ground. In addition or alternatively, the platform may comprises a series of depressions or channels configured to retain a natural material therein.

Generally, the weighing apparatus will comprise components over and above those shown in the preferred embodiment of the drawings, or be useful with associated accessories. For example, barriers may be fixed about the weighing platform so as to prevent the animal from stepping off the platform before an accurate weight is recorded. Gates may be provided so as to allow the animal to enter from one side of the platform and leave from another.

Furthermore flexible barriers may be provided about the lateral edges of the apparatus to prevent of inhibit material such as plant matter and soil from entering the space beneath the platform and inhibiting free vertical movement of the platform.

Additionally, a ramp and/or guiderails may be positioned to guide an animal onto the platform of the apparatus.

While the invention has been disclosed in connection with the preferred embodiments shown and described in detail, various modifications and improvements thereon will become readily apparent to those skilled in the art.

## Claims

1. Apparatus (10) for weighing an animal, the apparatus (10) comprising:
a weight bearing surface configured to allow an animal to bear its weight thereon and provided with a weighing platform provided having parallel side beams (20) connected by opposed end brackets (30),
a weight measurement device having lateral surfaces and configured such that the weight of an animal disposed on the weight bearing surface is measureable by the weight measurement device, and.
one or more barriers (55-50d, 60a-60d) disposed about the weight measurement device, the one or more barriers (50a-55d, 60a-60d) configured to limit or prevent contact of the weight measurement device with a liquid travelling toward the weight measurement device, **characterized in that**
the one or more barriers (55a-55d, 60a-60d) comprise a first barrier (55a-55d) disposed proximal to a lateral surface of the weight measurement device and a second barrier (60a-60d) disposed outwardly lateral to the first barrier (55a-55d), the first and second barriers (55a-55d, 60a-60d) provides a tortuous path for any water travelling toward the weight measurement device and are independently movable relative to each other,
wherein the second barriers (60a-60d) extend upwardly from a structure (65) disposed partially or completely inferior to the weight measurement device, and the first barriers (55a-55d) and the opposed brackets (30) extend downwardly from a structure (40) disposed partially or completely superior to the weight measurement device,the first set of barriers (55a-55d) and the second set of barriers (55a-55d) each forms a quadrilateral barrier, the first set of barriers (55a-55d) sitting inside the second set of barriers (55a-55d) and the second set of barriers is interleaved between the first set of barriers and said brackets (30).

2. The apparatus of claim 1, wherein the one or more barriers (55a-55d, 60a-60d) are disposed so as to face opposing lateral surfaces of the weight measurement device.

3. The apparatus of claim 1, wherein the one or more barriers (55a-55d, 60a-60d) are disposed to face most or all of the lateral surfaces of the weight measurement device.

4. The apparatus of claim 3, wherein the structure (65) disposed partially or completely inferior to the weight measurement device is a support base (65) configured to directly or indirectly bear on a substrate upon which the weighing apparatus is disposed.

5. The apparatus of claim 4, wherein the structure (40) disposed partially or completely superior to the weight measurement device is the weight bearing surface, or a structure connected directly or indirectly to the weight bearing surface.

6. The apparatus of any one of claims 1 to 5, configured such that the one or more barriers (55a-55d, 60a-60d) comprise a barrier configured to move downwardly upon an animal bearing its weight on the weight bearing surface, and upwardly upon an animal bearing its weight on the weight bearing surface.

7. The apparatus of claim 6, configured such that the first and second barriers (55a-55d, 60a-60d) are independently movable relative to each other, and limited in that movement to prevent a line of sight being established from a view at an outward lateral position and toward the weight measurement device.

8. The apparatus of claim 6, configured such that the first and second barriers (55a-55d, 60a-60d) are independently movable relative to each other, and limited in that movement such that from a lateral view the first and second barriers (55a-55d, 60a-60d) overlap.

9. The apparatus of claim 8, wherein the overlap is at least about 10, 20, 30, 40, 50, 60, 70, 80, 90 or 100 mm.

10. The apparatus of any one of claims 1 to 9, wherein the weight measurement device is an electrical or electronic device.

11. The apparatus of claim 10, wherein the weight measurement device comprises a load cell or a load bar.

12. The apparatus of claim 11, wherein the weight measurement device is configured to weigh an animal having a weight of at least about 5, 10, 20, 30, 40, 50, 60, 70, 80, 90, 100, 200, 300, 400, 500, 1000, 1500, 2000, 2500 or 3000 kg.

13. The apparatus of any one of claims 1 to 12, wherein the weight bearing surface is configured to conceal, or configured to facilitate concealment of a foreign sensory stimulus of the platform and/or associated structure from an animal to be weighed.

14. The apparatus of claim 13, wherein the foreign sensory stimulus is an auditory, visual or tactile stimulus arising from the animal to be weighed walking on the weight bearing surface.

15. The apparatus of claim 14, wherein the tactile stimulus is the texture, give or temperature of the weight bearing surface.

## Patentansprüche

1. Tierwiegevorrichtung (10), wobei die Vorrichtung (10) umfasst:
eine Gewichtsträgerfläche, die so konfiguriert ist, dass ein Tier sein Gewicht darauf tragen kann, und die mit einer Wiegeplattform versehen ist, die parallele Seitenträger (20) aufweist, die durch gegenüberliegende Endhalterungen (30) verbunden sind,
eine Gewichtsmesseinrichtung mit Seitenflächen, die so konfiguriert ist, dass das Gewicht eines auf der Gewichtsträgerfläche angeordneten Tieres durch die Gewichtsmesseinrichtung gemessen werden kann, und eine oder mehrere Barrieren (55-50d, 60a-60d), die um die Gewichtsmesseinrichtung herum angeordnet sind, wobei die eine oder mehreren Barrieren (50a-55d, 60a-60d) so konfiguriert sind, dass sie den Kontakt der Gewichtsmesseinrichtung mit einer in Richtung der Gewichtsmesseinrichtung fließenden Flüssigkeit begrenzen oder verhindern, **dadurch gekennzeichnet, dass**
die eine oder mehreren Barrieren (55a-55d, 60a-60d) eine erste Barriere (55a-55d), die nahe einer Seitenfläche der Gewichtsmesseinrichtung angeordnet ist, und eine zweite Barriere (60a-60d) umfassen, die seitlich außerhalb der ersten Barriere (55a-55d) angeordnet ist, wobei die erste und die zweite Barriere (55a-55d, 60a-60d) einen gewundenen Weg für jegliches Wasser bilden, das sich in Richtung der Gewichtsmesseinrichtung bewegt, und relativ zueinander unabhängig beweglich sind,
wobei sich die zweiten Barrieren (60a-60d) von einer Struktur (65) aus nach oben erstrecken, die teilweise oder vollständig unterhalb der Gewichtsmesseinrichtung angeordnet ist, und sich die ersten Barrieren (55a-55d) und die gegenüberliegenden Halterungen (30) von einer Struktur (40) nach unten erstrecken, die teilweise oder vollständig oberhalb der Gewichtsmesseinrichtung angeordnet ist, wobei der erste Satz von Barrieren (55a-55d) und der zweite Satz von Barrieren (55a-55d) jeweils eine viereckige Barriere bilden, wobei der erste Satz von Barrieren (55a-55d) innerhalb des zweiten Satzes von Barrieren (55a-55d) sitzt und der zweite Satz von Barrieren zwischen dem ersten Satz von Barrieren und den Halterungen (30) angeordnet ist.

2. Vorrichtung nach Anspruch 1, wobei die eine oder mehreren Barrieren (55a-55d, 60a-60d) so angeordnet sind, dass sie gegenüberliegenden Seitenflächen der Gewichtsmesseinrichtung zugewandt sind.

3. Vorrichtung nach Anspruch 1, wobei die eine oder mehreren Barrieren (55a-55d, 60a-60d) so angeordnet sind, dass sie den meisten oder allen Seitenflächen der Gewichtsmesseinrichtung zugewandt sind.

4. Vorrichtung nach Anspruch 3, wobei die teilweise oder vollständig unterhalb der Gewichtsmesseinrichtung angeordnete Struktur (65) eine Stützbasis (65) ist, die so konfiguriert ist, dass sie direkt oder indirekt auf einem Substrat aufliegt, auf dem die Wiegevorrichtung angeordnet ist.

5. Vorrichtung nach Anspruch 4, wobei die teilweise oder vollständig oberhalb der Gewichtsmesseinrichtung angeordnete Struktur (40) die gewichttragende Fläche oder eine direkt oder indirekt mit der Gewichtsträgerfläche verbundene Struktur ist.

6. Vorrichtung nach einem der Ansprüche 1 bis 5, die so konfiguriert ist, dass die eine oder mehreren Barrieren (55a-55d, 60a-60d) eine Barriere umfassen, die so konfiguriert ist, dass sie sich nach unten bewegt, wenn ein Tier sein Gewicht auf die Gewichtsträgerfläche bringt, und sich nach oben bewegt, wenn ein Tier sein Gewicht auf die Gewichtsträgerfläche bringt.

7. Vorrichtung nach Anspruch 6, die so konfiguriert ist, dass die erste und zweite Barriere (55a-55d, 60a-60d) unabhängig voneinander relativ zueinander beweglich sind und in dieser Bewegung begrenzt sind, um zu verhindern, dass eine Sichtlinie von einer Position seitlich außerhalb in Richtung der Gewichtsmesseinrichtung hergestellt wird.

8. Vorrichtung nach Anspruch 6, die so konfiguriert ist, dass die erste und zweite Barriere (55a-55d, 60a-60d) unabhängig voneinander relativ zueinander beweglich sind und in dieser Bewegung so begrenzt sind, dass sich die erste und zweite Barriere (55a-55d, 60a-60d) in der Seitenansicht überlappen.

9. Vorrichtung nach Anspruch 8, wobei die Überlappung mindestens etwa 10, 20, 30, 40, 50, 60, 70, 80, 90 oder 100 mm beträgt.

10. Vorrichtung nach einem der Ansprüche 1 bis 9, wobei die Gewichtsmesseinrichtung eine elektrische oder elektronische Einrichtung ist.

11. Vorrichtung nach Anspruch 10, wobei die Gewichtsmesseinrichtung eine Wiegezelle oder eine Laststange umfasst.

12. Vorrichtung nach Anspruch 11, wobei die Gewichtsmesseinrichtung so konfiguriert ist, dass sie ein Tier mit einem Gewicht von mindestens etwa 5, 10, 20, 30, 40, 50, 60, 70, 80, 90, 100, 200, 300, 400, 500, 1000, 1500, 2000, 2500 oder 3000 kg wiegen kann.

13. Vorrichtung nach einem der Ansprüche 1 bis 12, wobei die Gewichtsträgerfläche so konfiguriert ist, dass sie einen fremden sensorischen Reiz der Plattform und/oder der zugehörigen Struktur vor einem zu wiegenden Tier verbirgt oder dessen Verbergung erleichtert.

14. Vorrichtung nach Anspruch 13, wobei der fremde sensorische Reiz ein auditiver, visueller oder taktiler Reiz ist, der von dem zu wiegenden Tier ausgeht, wenn es auf der Gewichtsträgerfläche läuft.

15. Vorrichtung nach Anspruch 14, wobei der taktile Reiz die Beschaffenheit, die Elastizität oder die Temperatur der Gewichtsträgerfläche ist.

## Revendications

1. Appareil (10) de pesage d'un animal, l'appareil (10) comportant :
une surface porteuse configurée pour permettre de soutenir le poids d'un animal et pourvue d'une plateforme de pesage présentant des poutres latérales (20) parallèles reliées par des supports (30) d'extrémité opposés,
un dispositif de mesure de poids présentant des surfaces latérales et configuré de sorte que le poids d'un animal disposé sur la surface porteuse soit mesurable par le dispositif de mesure de poids, et
une ou plusieurs barrières (55-50d, 60a-60d) disposées autour du dispositif de mesure de poids, les une ou plusieurs barrières (50a-55d, 60a-60d) étant configurées pour limiter ou empêcher le contact du dispositif de mesure de poids avec un liquide se déplaçant vers le dispositif de mesure de poids, **caractérisé en ce que**
les une ou plusieurs barrières (55a-55d, 60a-60d) comportent une première barrière (55a-55d) disposée de manière proximale à une surface latérale du dispositif de mesure de poids et une seconde barrière (60a-60d) disposée latéralement vers l'extérieur par rapport à la première barrière (55a-55d), les première et seconde barrières (55a-55d, 60a-60d) fournissent un chemin sinueux pour toute eau se déplaçant vers le dispositif de mesure de poids et sont mobiles indépendamment l'une par rapport à l'autre,
dans lequel les secondes barrières (60a-60d) s'étendent vers le haut à partir d'une structure (65) disposée partiellement ou complètement plus bas que le dispositif de mesure de poids, et les premières barrières (55a-55d) et les supports (30) opposés s'étendent vers le bas à partir d'une structure (40) disposée partiellement ou complètement plus haut que le dispositif de mesure de poids, le premier ensemble de barrières (55a-55d) et le second ensemble de barrières (55a-55d) forment chacun une barrière quadrilatère, le premier ensemble de barrières (55a-55d) se trouvant à l'intérieur du second ensemble de barrières (55a-55d) et le second ensemble de barrières est entrelacé entre le premier ensemble de barrières et lesdits supports (30).

2. Appareil selon la revendication 1, dans lequel les une ou plusieurs barrières (55a-55d, 60a-60d) sont disposées de manière à faire face à des surfaces latérales opposées du dispositif de mesure de poids.

3. Appareil selon la revendication 1, dans lequel les une ou plusieurs barrières (55a-55d, 60a-60d) sont disposées pour faire face à la plupart ou à l'intégralité des surfaces latérales du dispositif de mesure de poids.

4. Appareil selon la revendication 3, dans lequel la structure (65) disposée partiellement ou complètement plus bas que le dispositif de mesure de poids est une base de support (65) configurée pour reposer directement ou indirectement sur un substrat sur lequel l'appareil de pesage est disposé.

5. Appareil selon la revendication 4, dans lequel la structure (40) disposée partiellement ou complètement plus haut que le dispositif de mesure de poids est la surface porteuse, ou une structure reliée directement ou indirectement à la surface porteuse.

6. Appareil selon l'une quelconque des revendications 1 à 5, configuré de sorte que les une ou plusieurs barrières (55a-55d, 60a-60d) comportent une barrière configurée pour se déplacer vers le bas lorsqu'un animal met son poids sur la surface porteuse, et vers le haut lorsqu'un animal met son poids sur la surface porteuse.

7. Appareil selon la revendication 6, configuré de sorte que les première et seconde barrières (55a-55d, 60a-60d) soient mobiles indépendamment l'une par rapport à l'autre, et à déplacement limité pour empêcher l'établissement d'une ligne de visée à partir d'une vue en position latérale vers l'extérieur et vers le dispositif de mesure de poids.

8. Appareil selon la revendication 6, configuré de sorte que les première et seconde barrières (55a-55d, 60a-60d) soient mobiles indépendamment l'une par rapport à l'autre, et à déplacement limité afin que, en vue latérale, les première et seconde barrières (55a-55d, 60a-60d) se chevauchent.

9. Appareil selon la revendication 8, dans lequel le chevauchement est d'au moins environ 10, 20, 30, 40, 50, 60, 70, 80, 90 ou 100 mm.

10. Appareil selon l'une quelconque des revendications 1 à 9, dans lequel le dispositif de mesure de poids est un dispositif électrique ou électronique.

11. Appareil selon la revendication 10, dans lequel le dispositif de mesure de poids comporte une cellule de charge ou une barre de charge.

12. Appareil selon la revendication 11, dans lequel le dispositif de mesure de poids est configuré pour peser un animal présentant un poids d'au moins environ 5, 10, 20, 30, 40, 50, 60, 70, 80, 90, 100, 200, 300, 400, 500, 1000, 1500, 2000, 2500 ou 3000 kg.

13. Appareil selon l'une quelconque des revendications 1 à 12, dans lequel la surface porteuse est configurée pour dissimuler, ou configurée pour faciliter la dissimulation d'un stimulus sensoriel étranger de la plateforme et/ou de la structure associée à un animal à peser.

14. Appareil selon la revendication 13, dans lequel le stimulus sensoriel étranger est un stimulus auditif, visuel ou tactile provenant du fait que l'animal à peser marche sur la surface porteuse.

15. Appareil selon la revendication 14, dans lequel le stimulus tactile est la texture, la sensation ou la température de la surface porteuse.
